# EUROPEAN PATENT SPECIFICATION

(11) **EP 1 234 696 B1**
(45) Date of publication and mention of the grant of the patent: **20.12.2006**
(21) Application number: 01200674.8
(22) Date of filing: 23.02.2001
(51) Int. Cl.: B60G 9/02

(54) **Damped suspended axle, in particular for agricultural machines, industrial vehicles and the like**
Gedämpfte, gefederte Achse, insbesondere für landwirtschaftliche Maschinen, Industriefahrzeuge und dergleichen
Essieu suspendu amorti, en particulier pour machines agricoles, véhicules industriels ou analogue

(43) Date of publication of application: 28.08.2002
(73) Proprietor: DANA ITALIA S.p.A, 38062 Arco (Trento) (IT)
(72) Inventor: Castellano, Pasquale Luigi, 20142 Milan (IT); Blini, Aldo, 24040 Calvenzano (Bergamo) (IT)
(74) Representative: Zanardo, Giovanni

(56) References cited:
- EP-A- 0 512 550
- EP-A- 0 553 516
- EP-A- 0 887 212
- EP-A- 0 997 328
- US-A- 4 418 932

## Description

The present invention refers to a damped suspended axle, in particular for agricultural machines, industrial vehicles and the like.

In what follows particular reference will be made to a front axle of a tractor; it is, however, clear that an axle according to the present invention can be advantageously mounted on any type of agricultural machine or industrial vehicle that is designed to move around and/or work in off-road conditions, for example in fields, as well as on the road.

As is known, all vehicles provided with four wheels are redundant structures, and, in order not to jump about when travelling, must have their wheels free to adapt to the other than perfect evenness of the ground.

Traditionally, the wheels are supported in pairs by two axles, a rear one and a front one, which are fixed in different ways to the chassis of the machine. The structure of the axles proves particularly complicated above all for the front axle, which is required to perform both the function of steering and the function of traction.

In traditional tractors, the front wheels are supported by a front axle which oscillates or rocks transversely with respect to the agricultural machine or industrial vehicle. This solution, albeit economical and technically valid as long as the speed of tractors used to have a somewhat limited value (less than 30-40 km/h), has proved altogether unsuitable for latest-generation tractors. The latter, in fact, have the possibility of moving around freely both off road, in fields, and on the road, at speeds that may even be high, the said speeds possibly reaching for the vehicles in question values of 50-60 km/h. At such speeds, a simple oscillating or rocking axle according to traditional embodiments proves not only very fatiguing for the tractor driver but also far from safe on account of the poor adherence of the wheels to the ground.

Damped suspended axles for the latest generation tractors are known from EP-A-512550, EP-A-553516 and EP-A-997328.

A purpose of the present invention is, therefore, to eliminate the technical problems referred to above by providing an improved damped suspended axle, in particular for agricultural machines, industrial vehicles and the like, which is safe in all driving conditions, both off road and on bumpy roads, as well as on asphalted roads, and both at low vehicle speeds and at high vehicle speeds.

Another purpose of the present invention is to provide a damped suspended axle that will guarantee high driving comfort for the driver. This obviously results in very reduced fatigue for the driver.

Yet another purpose of the present invention is to provide a damped suspended axle that is substantially economical.

Not the least important purpose of the present invention is to provide a damped suspended axle, in particular for agricultural machines, industrial vehicles and the like, which is substantially simple and reliable.

These and other purposes according to the present invention are achieved by providing a damped suspended axle, in particular for agricultural machines, industrial vehicles and the like, in accordance with Claim 1.

Other characteristics of the present invention are further defined in the subsequent claims.

Advantageously, a damped suspended axle according to the present invention guarantees greater traction, and hence also a higher productivity. In addition to enabling energy saving and lower tyre consumption, this fact makes possible an increase and amplification of the operating possibilities of the tractor.

An axle built according to the present invention affords a high self-stabilizing capacity and moreover makes it possible to increase considerably the capacity for damping the stresses resulting from possible impact on the vehicle from the variable conditions of the terrain.

In addition, the axle according to the present invention is equipped with a very compact assembly which groups together all the auxiliary elements required for axle operation.

In particular, forming part of the said assembly are gas-charged accumulators, a valve assembly, and an electronic control unit.

Further characteristics and advantages of a damped suspended axle, in particular for agricultural machines, industrial vehicles and the like, according to the present invention, will emerge more clearly from the ensuing description, which is given to provide nonlimiting examples, with reference to the annexed schematic drawings, in which:
Figure 1 shows a top plan view of an embodiment of the axle according to the present invention;

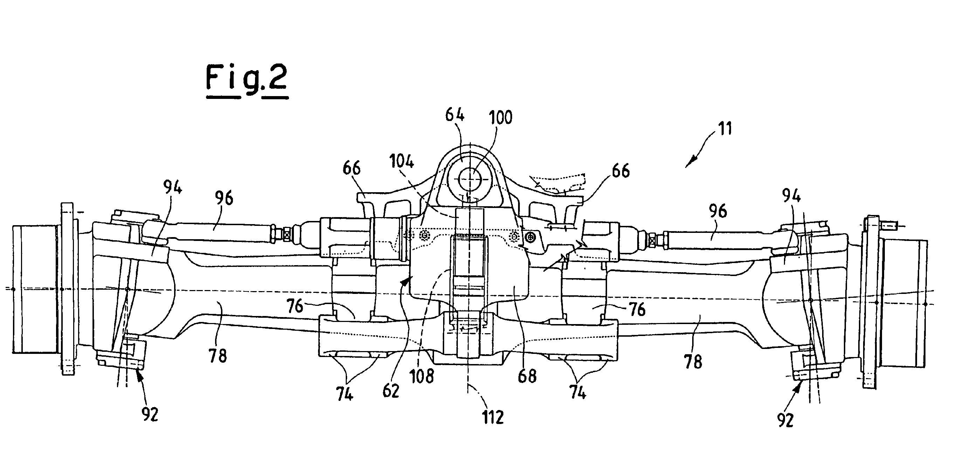

Figure 2 shows a front elevation view of the axle of Figure 1;
Figure 3 shows a rear elevation view of one portion of the axle of Figure 1;

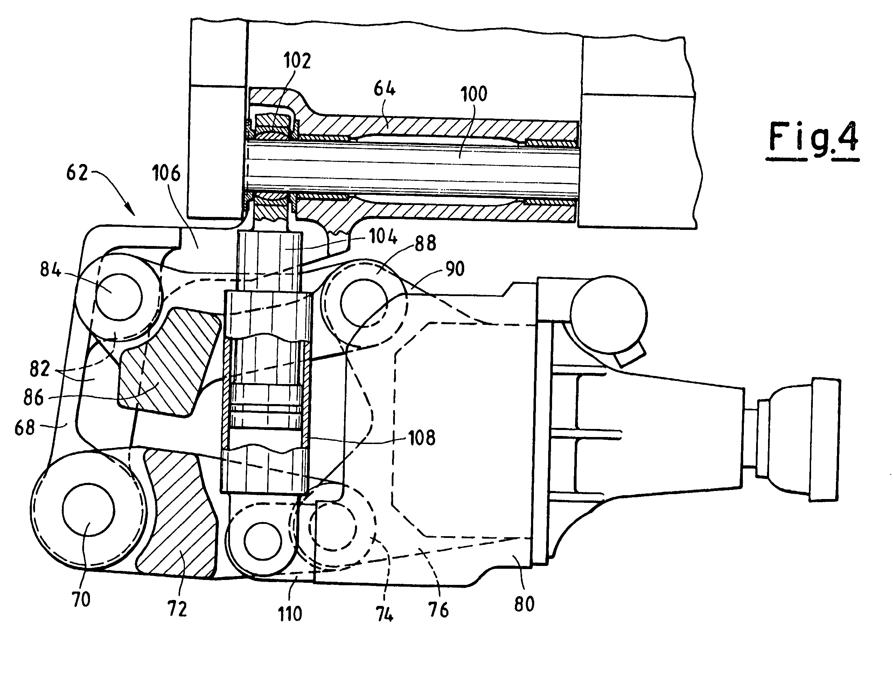

Figure 4 shows an enlarged cross section, according to the line IV-IV of Figure 1, of the axle in accordance with the present invention.

With particular reference to the above figures, illustrated therein is a first embodiment of a damped suspended axle, in particular for use in agricultural machines, industrial vehicles and the like, the axle as a whole being designated by the reference number 11.

The axle 11 comprises a top support 62 consisting of a top tubular end 64 at the sides of which are integrally fixed two plates 66 which extend and join together to identify a bracket-like extension 68.

The extension 68 carries, at one free end, ribbings 82 which support, in a rotatable way, a first pin 70. The pin 70 projects and, at each one of its ends, carries, in an integral way, an arm 72 terminating with a fork 74. Each of the two forks 74 is pivoted to an end 76 which extends from an arm 78 that is integral with the hollow central body 80 of the axle 11. The central body 80 and the arms 78 make up a load-bearing element of the axle 11.

In a position corresponding to the extension 68 are moreover provided ribbings 82 having a through hole in which a second pin 84 is inserted. Also the second pin 84 projects from the ribbings 82 and carries, integral with each one of its two ends, an arm 86 set above a corresponding arm 72. Each of the two arms 86, in turn, terminates with a fork 88 which is pivoted to an end 90. Of course, also the two ends 90 extend from each arm 78, which is integral with the central body 80.

At the end of each of the arms 78, the axle 11 carries a steering wheel hub assembly 92 from which there projects a lever 94 to which is connected an articulated rod 96. The articulated rod 96 can be actuated in translation by a steering actuator 98, in such a way as to control steering of the two wheel-hub assemblies 92.

Inserted in the top tubular end 64 is a pin 100 by means of which the axle 11 is anchored to the chassis of an agricultural machine or industrial vehicle.

On the same pin 100, on one of its portions that projects on the side of the extension 68, is fixed a ball-and-socket joint 102 which is integral with a rod 104 of a shock-absorber.

The rod 104 passes through an opening 106 of the support 62 and inserts inside a cylinder 108. The latter is, in turn, pivoted to one end 110 which extends from the central body 80 of the axle 11 at a point corresponding to an axis of symmetry 112 of the latter. The end 110 is set between the two arms 72.

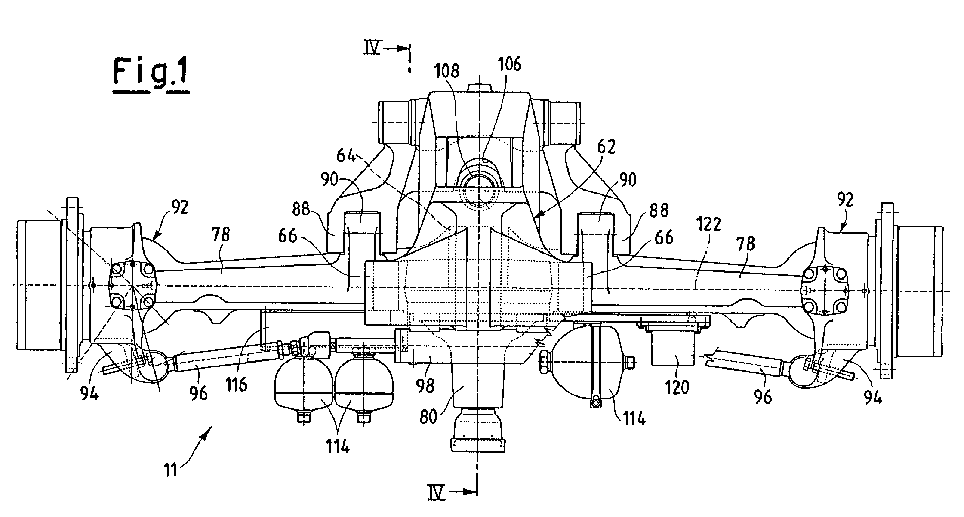

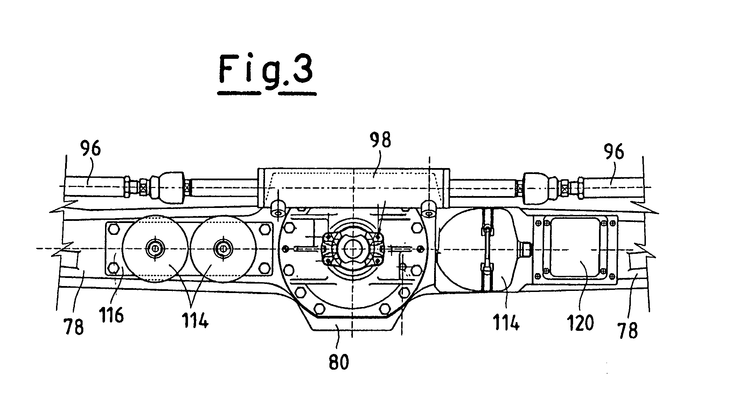

The cylinder 108 is connected to gas-charged accumulators 114 by means of pipes (not shown for reasons of simplicity). As may be clearly seen in Figures 1 and 3, the accumulators 114 are three in number, one of a larger size and two of a smaller size. The two smaller-sized accumulators 114 are supported by a valve assembly 116, which is in turn supported by one of the arms 78 of the axle 11. The remaining larger-sized accumulator 114 is instead directly fixed to the arm 78 of the axle 11. In a position adjacent to the larger-sized accumulator 114 is fixed an electronic control unit 120 which controls opening and/or closing of solenoid valves (not shown) designed to set the cylinder 108 in communication with the accumulators 114 and with the hydraulic circuit of the machine or vehicle.

Operation of the damped suspended axle 11, in particular for agricultural machines, industrial vehicles and the like, according to the present invention, is basically as described in what follows.

The axle 11 is anchored underneath the chassis of the agricultural machine or industrial vehicle by means of the pin 100.

When the axle 11 is mounted underneath the chassis of the vehicle, it can be operated in two different modes.

According to a first operating mode, the cylinder 108 does not have oil under pressure in its chambers, and the rod 104 comes down, bringing the piston that is integral with the rod 104 into contact with the bottom of the cylinder 108.

In this situation, the axle 11 operates as a traditional axle, being able only to oscillate or swing about the pin 100.

According to a second operating mode, instead, fluid under pressure is introduced into the two chambers of the cylinder 108.

In this case, any stresses on the chassis of the machine or vehicle or on the axle 11 itself move the rod 104 in one of two directions, either towards the inside or towards the outside of the cylinder 108.

In this situation, the arms 72 and 86 rotate, on one side, about the pins 70 and 84 and, on the other side, about respective hinges, causing the arms 78 and the central body 80 to translate substantially parallel to one another. At the same time, the oil contained in the cylinder 108, passing into the gas-charged accumulators, dampens the oscillations.

In practice, the arms 78 and the central body 80 translate along the axis 112, with very limited, and anyway practically negligible, rotations about a transverse axis 122 or about another axis parallel to the axis 122.

Modifications and variations to the axle 11 according to the present invention, in addition to the ones already mentioned, are of course possible.

In particular, a second embodiment of the axle 11, not illustrated for reasons of simplicity, is similar to the one previously described and differs from it in that it is provided with two shock-absorbing elements.

Maintaining the same reference numbers as for the first embodiment of the invention, at the tubular top end are fixed two attachment points, and to these are connected the rods 104 of the shock-absorbing element. The rods 104 are inserted inside the cylinders 108 that traverse the forks 74, 88 and are fixed to the arms 78.

In addition, besides being set at the front of the axle 11 according to the invention, when the latter is mounted on a machine or vehicle, the shock-absorbing elements or hydraulic cylinders may be set also at the rear, without the operation of the axle 11 according to the invention undergoing substantial modifications. In these cases, the tubular top end 64 has two attachment points to which the top ends of the shock-absorbing elements are fixed by means of ball-and-socket joints.

Obviously the operation of the axle 11 according to the second embodiment is the same as already described for the first embodiment.

In practice, it has been noted that the damped suspended axle according to the invention, in particular for use on agricultural machines, industrial vehicles and the like, is particularly advantageous in so far as it is very safe and ensures a high degree of driving comfort for the driver, together with a very limited fatigue.

In addition, the very compact assembly of auxiliary elements, all of which, on the other hand, are integral with the axle, enables easy accessibility to the said auxiliary elements and a reduction in overall dimensions, as well as guaranteeing a high level of reliability.

The damped suspended axle, in particular for agricultural machines, industrial vehicles and the like, as it is conceived, may undergo numerous additional modifications and variations, all falling within the scope of the attached claims.

## Claims

1. A damped suspended axle (11), for supporting a pair of wheels in particular for agricultural machines, industrial vehicles and the like, comprising, in a central frontal position, a top support (62) designed to be fixed to the chassis of said agricultural machine or industrial vehicle, said top support (62) being connected to a load-bearing element (78, 80) of the axle (11) for wheels, made up by an hollow central body (80) of the axle (11) and by two arms (78) integral with the hollow central body (80) and extending from each side of it, for carrying the wheels at their ends, said support (62) being connected in an articulated way to said load-bearing element (78, 80), by means of first arms (72) and, set above, second arms (86), pivotally connected at one end to the top support (62) and at the other end respectively to an end (76) and to an end (90) of the arms (78) so that when the first and second arms rotate, the load bearing element is translated substantially parallel to itself, i.e. along the axis (112) of the suspended axle (11) that passes throughout the wheels, at least one shock-absorbing element (104, 108), comprising at least one hydraulic cylinder (108) associated to a rod (104) being pivotally set between the top support (62) and the load-bearing element (78, 80), **characterised in that** said top support (62) consists of a top tubular end (64) at the sides of which are integrally fixed two plates (66) which extend and join together to identify a bracket-like extension (68) and **in that** a pin (100) oriented in front-rear direction, is inserted in the top tubular end (64) and by means of said pin (100) the axle (11) is anchored to the chassis of an agricultural machine or industrial vehicle, the extension (68) carries, at one free end, ribbings (82) which support, in a rotatable way, a first pin (70), the pin (70) projects and, at each one of its ends, carries, in an integral way, an arm (72) terminating with a fork (74), each of the two forks (74) being pivoted to an end (76) which extends from an arm (78) that is integral with the hollow central body (80) of the axle (11), and **in that** in a position corresponding to the extension (68) are moreover provided with ribbings (82) having a through hole in which a second pin (84) is inserted, the second pin (84) projects parallel to the first pin (70) and perpendicular to the rear-front direction from the ribbings (82) and carries, integral with each one of its two ends, the second arm (86) set above the corresponding arm (72), each of the two arms (86), in turn, terminates with a fork (88) which is pivoted to the end (90), and **in that** the cylinder (108) of said shock-absorbing element (104, 108) is pivoted to one end (110) which extends from said central body of the axle (11) and the rod (104) of the shock-absorbing element (104, 108) is pivoted by means of a ball-and-socket joint (102) to the top support (62), the ball-and-socket joint (102) being integral with the rod (104) and being fixed on one of the portions of the pin (100) that projects on the side of the extension (68), and **in that** the rod (104) passes through an opening (106) of the support (62) and inserts inside the cylinder (108), the latter being, in turn, pivoted to one end (110) at a point corresponding to an axis of symmetry (112) of the latter, the end (110) being set between the two arms (72), the cylinder (108) being connected to gas-charged accumulators (114).

2. A damped suspended axle (11) according to Claim 1, **characterized in that** it supports at least one valve assembly (116), which in turn supports at least one gas-charged accumulator (114) associated to said shock-absorbing element (104, 108).

3. A damped suspended axle (11) according to Claim 2, **characterized in that** said arm (78) of said axle (11) supports at least one electronic control unit (120).

## Patentansprüche

1. Gedämpfte gefederte Achse (11) zum Tragen eines Paars von Rädern insbesondere für landwirtschaftliche Maschinen, Industriefahrzeuge und dergleichen, umfassend eine obere Halterung (62) in einer zentralen Frontalposition, welche ausgelegt ist, an dem Fahrgestell der landwirtschaftlichen Maschine oder des Industriefahrzeugs befestigt zu werden, wobei die obere Halterung (82) mit einem lasttragenden Element (78, 80) der Achse (11) für Räder verbunden ist, welches durch einen hohlen Zentralkörper (80) der Achse (11) und durch zwei mit dem hohlen Zentralkörper (80) integrale Arme (78), welche sich von jeder Seite von diesem erstrecken, um die Räder an ihren Enden zu tragen, gebildet ist, wobei die Halterung (62) in einer gelenkmäßigen Weise mit dem lasttragenden Element (78, 80) durch erste Arme (72) und oberhalb festgesetzte zweite Arme (86), welche an einem Ende schwenkbar mit der oberen Halterung (62) verbunden sind und an dem anderen Ende jeweils mit einem Ende (76) bzw. einem Ende (90) der Arme (78) verbunden sind, verbunden ist, so dass, wenn sich die ersten und zweiten Arme drehen, das lasttragende Element im Wesentlichen parallel zu sich selbst verschoben wird, das heißt entlang der Achse (112) der gefederten Achse (11), welche durch die Räder hindurch geht, zumindest ein stoßabsorbierendes Element (104, 108), welches zumindest einen hydraulischen Zylinder (108) umfasst, welcher einer Stange (104) zugeordnet ist, welche schwenkbar zwischen der oberen Halterung (62) und dem lasttragenden Element (78, 80) angeordnet ist, **dadurch gekennzeichnet, dass** die obere Halterung (62) aus einem oberen rohrförmigen Ende (64) besteht, an dessen Seiten integral zwei Platten (66) befestigt sind, welche sich erstrecken und miteinander verbinden, um eine klammerähnliche Verlängerung (68) zu bilden, und dass ein in Front/Rückwärtsrichtung ausgerichteter Stift (100) in das obere rohrförmige Ende (64) eingesetzt ist und die Achse (11) mittels des Stiftes (100) an dem Fahrgestell einer landwirtschaftlichen Maschine oder Industriefahrzeugs verankert wird, dass die Verlängerung (68) an einem freien Ende Verrippungen (82) trägt, welche in drehbarer Weise einen ersten Stift (70) tragen, dass der Stift (70) herausragt und an jedem seiner Enden in integraler Weise einen in einer Gabel (74) endenden Arm (72) trägt, wobei jede der zwei Gabeln (74) an einem Ende (76) drehbar gelagert ist, welches sich von einem Arm (78) erstreckt, welcher integral mit dem hohlen Zentralkörper (80) der Achse (11) ist, und dass sie in einer Position, welche der Verlängerung (68) entspricht, weiterhin mit Verrippungen (82) versehen sind, welche ein durchgehendes Loch aufweisen, in welches ein zweiter Stift (84) eingesetzt ist, wobei der zweite Stift (84) parallel zu dem ersten Stift (70) und senkrecht zu der Rückwärts-Front-Richtung aus den Verrippungen (82) ragt und integral mit jedem seiner zwei Enden den oberhalb des entsprechenden Arms (72) angeordneten zweiten Arm (86) trägt, wobei jeder der zwei Arme (86) wiederum in einer Gabel (88) endet, welche an dem Ende (90) drehbar gelagert ist, und dass der Zylinder (108) des stoßabsorbierenden Elements (104, 108) an einem Ende (110) drehbar gelagert ist, welches sich von dem Zentralkörper der Achse (11) erstreckt, und die Stange (104) des stoßabsorbierenden Elements (104, 108) mittels eines Kugelgelenks (102) an der oberen Halterung (62) drehbar gelagert ist, wobei das Kugelgelenk (102) integral mit der Stange (104) ist und an einem der Abschnitte des Stiftes (100) befestigt ist, welcher an der Seite der Verlängerung (68) herausragt, und dass die Stange (104) durch eine Öffnung (106) der Halterung (62) hindurch geht und in dem Zylinder (108) eingesetzt ist, wobei der letztere wiederum an einem Ende (110) an einem Punkt drehbar gelagert ist, welcher einer Symmetrieachse (112) des letzteren entspricht, wobei das Ende (110) zwischen die zwei Arme (72) gesetzt ist, wobei der Zylinder (108) mit mit Gas befüllten Akkumulatoren (114) verbunden ist.

2. Gedämpfte gefederte Achse (11) nach Anspruch 1, **dadurch gekennzeichnet, dass** sie mindestens eine Ventilanordnung (116) trägt, welche wiederum zumindest einen dem stoßabsorbierenden Element (104, 108) zugeordneten mit Gas befüllten Akkumulator (114) trägt.

3. Gedämpfte gefederte Achse (11) nach Anspruch 2, **dadurch gekennzeichnet, dass** der Arm (78) der Achse (11) zumindest eine elektronische Steuereinheit (120) trägt.

## Revendications

1. Essieu suspendu amorti (11), destiné à supporter une paire de roues en particulier pour machines agricoles, véhicules industriels et analogue, comprenant, au niveau d'une position frontale centrale, un support supérieur (62) conçu pour être fixé au châssis de ladite machine agricole ou dudit véhicule industriel, ledit support supérieur (62) étant connecté à un élément porteur (78, 80) de l'essieu (11) pour roues, constitué d'un corps central creux (80) de l'essieu (11) et de deux bras (78) formé d'un seul tenant avec le corps central creux (80) et s'étendant à partir de chaque côté de celui-ci, pour supporter les roues au niveau de leurs extrémités, ledit support (62) étant connecté de façon articulée audit élément porteur (78, 80), au moyen de premiers bras (72) et, définis au-dessus de ces derniers, de seconds bras (86), connectés de façon à pouvoir pivoter au niveau d'une extrémité au support supérieur (62) et au niveau de l'autre extrémité respectivement à une extrémité (76) et à une extrémité (90) des bras (78) de sorte que lorsque les premier et les second bras tournent, l'élément porteur est translaté de façon sensiblement parallèle à lui-même, c'est-à-dire le long de l'axe (112) de l'essieu suspendu (11) qui passe au travers des roues, au moins un élément amortisseur de chocs (104, 108), comprenant au moins un vérin hydraulique (108) associé à une tige (104) étant définie de façon à pouvoir pivoter entre le support supérieur (62) et l'élément porteur (78, 80), **caractérisé en ce que** ledit support supérieur (62) est constitué d'une extrémité tubulaire supérieure (64) au niveau des côtés de laquelle sont fixés d'un seul tenant deux plaques (66) qui s'étendent et se joignent l'une à l'autre afin de définir une rallonge de type patte de fixation (68) et **en ce qu'**un axe (100) orienté dans la direction allant de l'avant vers l'arrière, est inséré dans l'extrémité tubulaire supérieure (64) et au moyen dudit axe (100) l'essieu (11) est fixé au châssis d'une machine agricole ou d'un véhicule industriel, la rallonge (68) supporte, au niveau d'une extrémité libre, des surfaces côtelées (82) qui supportent, de façon à pouvoir tourner, un premier axe (70), l'axe (70) fait saillie et, au niveau de chacune de ses extrémités, supporte, d'un seul tenant, un bras (72) se terminant par une fourchette (74), chacune des deux fourchettes (72) étant pivotée au niveau d'une extrémité (76) qui s'étend à partir d'un bras (78) qui est formé d'un seul tenant avec le corps central creux (80) de l'essieu (11), et **en ce que** dans une position correspondant à la rallonge (68) il est en outre fourni des surfaces côtelées (82) ayant un trou débouchant dans lequel un second axe (84) est inséré, le second axe (84) fait saillie de façon parallèle au premier axe (70) et de façon perpendiculaire à la direction allant de l'arrière vers l'avant à partir des surfaces côtelées (82) et supporte, d'un seul tenant avec chacune de ses deux extrémités, le second bras (86) défini au-dessus du bras correspondant (72), chacun des deux bras (86), à leur tour, se terminent par une fourchette (88) qui est pivotée vers l'extrémité (90), et **en ce que** le vérin (108) dudit élément amortisseur de chocs (104, 108) est pivoté vers une extrémité (110) qui s'étend à partir dudit corps central de l'essieu (11) et la tige (104) de l'élément amortisseur de chocs (104, 108) est pivotée au moyen d'un joint à rotule (102) vers le support supérieur (62), le joint à rotule (102) étant formé d'un seul tenant avec la tige (104) et étant fixé sur l'une des parties de l'axe (100) qui fait saillie sur le côté de la rallonge (68), et **en ce que** la tige (104) passe au travers d'une ouverture (106) du support (62) et s'insère à l'intérieur du vérin (108), ce dernier étant, à son tour, pivoté vers une extrémité (110) au niveau d'un point correspondant à un axe de symétrie (112) de ce dernier, l'extrémité (110) étant définie entre les deux bras (72), le vérin (108) étant connecté à des accumulateurs à gaz sous pression (114).

2. Essieu suspendu amorti (11) selon la revendication 1, **caractérisé en ce qu'**il supporte au moins un boîtier de soupapes (116), qui à son tour supporte au moins un accumulateur à gaz sous pression (114) associé audit élément amortisseur de chocs (104, 108).

3. Essieu suspendu amorti (11) selon la revendication 2, **caractérisé en ce que** ledit bras (78) dudit essieu (11) supporte au moins un groupe régulateur électronique (120).
